# EUROPEAN PATENT APPLICATION

(11) **EP 3 009 709 A1**
(43) Date of publication of application: **20.04.2016**
(21) Application number: 13882629.2
(22) Date of filing: 13.06.2013
(51) Int. Cl.: F16F 15/08

(54) **VIBRATION DAMPING DEVICE**

(71) Applicant: Sumitomo Riko Company Limited, Komaki-shi, Aichi 485-8550 (JP)
(72) Inventor: SUZUKI, Tomomi, Komaki-shi Aichi 485-8550 (JP)
(74) Representative: Müller-Boré & Partner Patentanwälte PartG mbB
(86) International application number: PCT/JP2013/003715
(87) International publication number: WO 2014/199418

(57) **Abstract**

A vibration damping device (10) wherein a first mounting member (16) and a second mounting member (18) are fixed to a tubular main rubber elastic body (20), and an axial direction load is applied between the first and second mounting members (16, 18) in an installed state. A separate sleeve (14) is inserted in a non-fixed state in the main rubber elastic body (20), and a rubber side abutting part (34) provided on an inner circumference surface of the main rubber elastic body (20) and a sleeve side abutting part (36) provided on an outer circumference surface of the separate sleeve (14) are pushed against each other so that the separate sleeve (14) is held in the main rubber elastic body (20). In the installed state, the rubber side abutting part (34) and the sleeve side abutting part (36) are relatively displaced in an axial direction so as to reduce a holding force acting between the main rubber elastic body (20) and the separate sleeve (14).

## Description

### TECHNICAL FIELD

The present invention relates to a vibration damping device used for an engine mount of an automobile or the like.

### BACKGROUND ART

From the past, known are vibration damping devices interposed between members subject to vibration damping coupling, for doing vibration damping coupling of those members to each other. As disclosed for example in Japanese Unexamined Patent Publication No. JP-A-2002-235784 (Patent Document 1) and the like, this vibration damping device has a first mounting member fixed to one axial end surface of a tube shaped main rubber elastic body, and also has a second mounting member fixed to the outer circumference surface of the main rubber elastic body, and by so doing, has a structure for which the first mounting member and the second mounting member are elastically coupled by the main rubber elastic body. Also, using a mounting rod inserted in the main rubber elastic body, the first mounting member is attached to a first member subject to vibration damping coupling such as the power unit or the like, and the second mounting member is attached to a second member subject to vibration damping coupling such as the vehicle body or the like.

However, with the vibration damping device noted in Patent Document 1, the tubular part is inserted in the first and second rubber elastic bodies constituting the main rubber elastic body, and the tubular part is fixed to the inner circumference surface of the first rubber elastic body, and is inserted in an unfixed state in the second rubber elastic body.

However, when the tubular part is fixed to the first rubber elastic body, the relative displacement of the tubular part and the inner circumference surface of the main rubber elastic body is restricted, and since the first rubber elastic body is restrained by the tubular part, the dynamic spring characteristics of the first rubber elastic body become relatively hard, and there was the risk that when flexible spring characteristics are required, it would be difficult to satisfy the required characteristics.

By doing insertion arrangement of the tubular part in a non-fixed state to both the first rubber elastic body and the second rubber elastic body, it is possible to set more flexible spring characteristics. However, in this case, for example since the outer circumference surface of the tubular part is supported in a non-fixed state by pushing against the inner circumference surface of the first and second rubber elastic body or the like, when the abutting pressure of the first and second rubber elastic body on the tubular part is set low, there is the risk of the tubular part in a stand-alone state before installation on the member subject to vibration damping coupling falling out from the first and second rubber elastic body. On the other hand, when the abutting pressure of the first and second rubber elastic body on the tubular part is set high, the spring of the first and second rubber elastic body becomes hard in a state installed on the member subject to vibration damping coupling, and it becomes difficult to realize the flexible spring characteristics that are the target, so with attaching the tubular part in a non-fixed state to the main rubber elastic body, realizing the target spring characteristics was not easy.

### BACKGROUND ART DOCUMENT

### PATENT DOCUMENT

Patent Document 1: JP-A-2002-235784

### SUMMARY OF THE INVENTION

### PROBLEM THE INVENTION ATTEMPTS TO SOLVE

The present invention was created with the circumstances described above in the background, and the problem it is to solve is to provide a vibration damping device of a novel structure for which a separate sleeve is supported stably on a main rubber elastic body before installation on the member subject to vibration damping coupling, and also, for which it is possible to obtain flexible spring characteristics which prevents having higher dynamic spring of the main rubber elastic body due to attaching of the separate sleeve in the installed state.

### MEANS FOR SOLVING THE PROBLEM

Specifically, a first mode of the present invention provides a vibration damping device wherein a first mounting member is fixed to one axial end surface of a tubular main rubber elastic body while a second mounting member is fixed to an outer circumference surface of the main rubber elastic body, and an axial direction load is applied between the first mounting member and the second mounting member in an installed state in which the first mounting member is attached to a first member subject to vibration damping coupling by a mounting rod inserted in the main rubber elastic body being fixed to the first mounting member while the second mounting member is attached to a second member subject to vibration damping coupling, the vibration damping device being characterized in that: a separate sleeve is inserted in a non-fixed state in the main rubber elastic body, and a rubber side abutting part provided on an inner circumference surface of the main rubber elastic body and a sleeve side abutting part provided on an outer circumference surface of the separate sleeve are pushed against each other so that the separate sleeve is held in the main rubber elastic body; and in the installed state, the rubber side abutting part and the sleeve side abutting part are relatively displaced in an axial direction so as to reduce a holding force acting between the main rubber elastic body and the separate sleeve.

With the vibration damping device constituted according to the first mode of the present invention, in a stand-alone state before installation on the member subject to vibration damping coupling, the separate sleeve is held in the main rubber elastic body by the rubber side abutting part of the main rubber elastic body and the sleeve side abutting part of the separate sleeve mutually pushing against each other. By doing that, during transport or storage or the like of the vibration damping device, it is possible to prevent the separate sleeve from falling out and separating from the main rubber elastic body, and it is possible to stably maintain a state for which the separate sleeve is inserted in the main rubber elastic body.

On the other hand, in a state installed on the member subject to vibration damping coupling, by an axial direction load being applied between the first mounting member and the second mounting member, since the rubber side abutting part and the sleeve side abutting part are displaced relative to each other, the pushing against each other of the rubber side abutting part and the sleeve side abutting part is cancelled. By so doing, there is a decrease in the holding force acting between the main rubber elastic body and the separate sleeve, and relative displacement is allowed between the inner circumference surface of the main rubber elastic body and the separate sleeve, so higher dynamic spring due to restriction by the separate sleeve on the inner circumference surface of the main rubber elastic body is avoided, and it is possible to realize flexible spring characteristics. In this way, the holding force required before installation on the member subject to vibration damping coupling is reduced in the installed state by the axial direction load acting on the member subject to vibration damping coupling during installation, and flexible spring characteristics are realized without requiring a special operation by installation on the member subject to vibration damping coupling.

By having a constitution with which the separate sleeve is inserted in the main rubber elastic body, compared to when the mounting rod is directly inserted in the main rubber elastic body, by appropriately setting the forming material, the surface processing and the like of the separate sleeve interposed between the main rubber elastic body and the mounting rod, it is possible to effectively realize the required vibration damping characteristics, prevention of abnormal noise, and the like.

In addition, by appropriately setting the thickness, inner and outer diameter dimensions, the shape and the like of the separate sleeve, it is possible to adjust the substantial clearance of the main rubber elastic body and the mounting rod for a plurality of types of combinations with different main rubber elastic body internal diameter and mounting rod outer diameter differentials.

A second mode of the present invention provides the vibration damping device according to the first mode, wherein the rubber side abutting part and the sleeve side abutting part are provided continuously in a ring shape in a circumferential direction.

With the second mode, in the stand-alone state before installation, it is possible to have the rubber side abutting part and the sleeve side abutting part continuously abut along the entire circumference. By so doing, by the pushing of the rubber side abutting part and the sleeve side abutting part against each other, the holding force that acts between the main rubber elastic body and the separate sleeve is exhibited with good balance and at a high level on the circumference, and it is possible to more advantageously avoid falling out and separating of the separate sleeve from the main rubber elastic body.

A third mode of the present invention provides the vibration damping device according to the first or second mode, wherein a gap is formed between the inner circumference surface of the main rubber elastic body and the outer circumference surface of the separate sleeve.

With the third mode, the abutting surface area of the inner circumference surface of the main rubber elastic body and the outer circumference surface of the separate sleeve becomes small, so the range restrained by the separate sleeve on the inner circumference surface of the main rubber elastic body is more restricted, and low dynamic spring of the main rubber elastic body in the installed state is more effectively produced.

A fourth mode of the present invention provides the vibration damping device according to any one of the first through third modes, wherein an elastic projecting part is provided on the inner circumference surface of the main rubber elastic body, and the rubber side abutting part is constituted by the elastic projecting part.

With the fourth mode, since the rubber side abutting part is provided locally at the inner circumference surface of the main rubber elastic body, by the relative displacement in the axial direction of the rubber side abutting part and the sleeve side abutting part, there is a significant switching of the holding force acting between the main rubber elastic body and the separate sleeve. Therefore, the stable holding of the separate sleeve in the stand-alone state before installation and the low dynamic spring characteristics of the main rubber elastic body in the installed state are both effectively realized.

A fifth mode of the present invention provides the vibration damping device according to any one of the first through fourth modes, wherein the elastic projecting part has an inclined plane which is positioned at an insertion tip end side of the separate sleeve with respect to the main rubber elastic body, the inclined plane inclined to an insertion base end side of the separate sleeve facing an inner circumference side of the main rubber elastic body.

With the fifth mode, by having the surface of the elastic projecting part positioned at the insertion tip end side of the separate sleeve be an inclined plane, when removing the mold for forming the inner circumference surface of the main rubber elastic body in the axial direction, it is less likely for the mold to get caught on the elastic projecting part. Therefore, it is possible to form the main rubber elastic body equipped with the elastic projecting part using a simple mold structure.

A sixth mode of the present invention provides the vibration damping device according to any one of the first through fifth modes, wherein a large diameter part and a small diameter part are provided on the outer circumference surface of the separate sleeve, and a step part is provided between the large diameter part and the small diameter part, while the sleeve side abutting part is constituted by the large diameter part.

With the sixth mode, the outer diameter dimension of the separate sleeve incrementally changes as it sandwiches the step part. Accordingly, in the stand-alone state before installation, the rubber side abutting part is pressed by the large diameter part and a high holding force is exhibited. Meanwhile, in the installed state, by the rubber side abutting part moving over the small diameter part, the holding force is sufficiently reduced, thereby producing low dynamic spring of the main rubber elastic body.

A seventh mode of the present invention provides the vibration damping device according to the sixth mode, wherein the small diameter part is provided on an insertion tip end part of the separate sleeve with respect to the main rubber elastic body, and an outer circumference surface of the small diameter part comprises a tapered surface which has a gradually smaller diameter going toward the insertion tip end side of the separate sleeve.

With the seventh mode, by the outer circumference surface of the small diameter part provided at the insertion tip end part of the separate sleeve being a tapered surface, insertion of the separate sleeve into the main rubber elastic body is easy. In fact, for example when the separate sleeve is formed using synthetic resin, it is easy to remove the mold from the separate sleeve to the insertion tip end side after forming, so molding of the separate sleeve is easy.

If the outer circumference surface of the large diameter part is similarly made to have a tapered surface with a diameter that gradually gets smaller facing the insertion tip end side the same as with the small diameter part, then mold removal after forming of the separate sleeve is easier. Naturally, for example in cases such as when constituting a stopper means in the axis-perpendicular direction by having the outer circumference surface of the large diameter part and the second mounting member abut or the like, to ensure a large substantial abutting surface area of the large diameter part and the second mounting member and effectively obtain stopper action, it is preferable to have the incline angle in relation to the axial direction set for the outer circumference surface be smaller than that of the small diameter part, and to have the outer circumference surface be roughly parallel in relation to the axial direction.

An eighth mode of the present invention provides the vibration damping device according to any one of the first through seventh modes, wherein a tubular part provided on the second mounting member is fixed along an entire circumference to the outer circumference surface of the main rubber elastic body, and the rubber side abutting part is provided on an inner circumference side of the tubular part.

With the eighth mode, by the main rubber elastic body being restrained by the tubular part of the second mounting member, when there is pushing of the rubber side abutting part and the sleeve side abutting part against each other, it is possible to prevent elastic deformation of the main rubber elastic body to the outer circumference side by the abutting pressure acting on the rubber side abutting part. Therefore, in the stand-alone state before installation, holding force that acts between the main rubber elastic body and the separate sleeve is effectively obtained, and the separate sleeve is stably held on the main rubber elastic body.

A ninth mode of the present invention provides the vibration damping device according to any one of the first through eighth modes, wherein the separate sleeve is formed of synthetic resin.

With the ninth mode, it is possible to realize a light weight separate sleeve. In fact, by making it with a synthetic resin having excellent formability, it is possible to easily form various shaped separate sleeves according to the required characteristics. In addition, using a synthetic resin material that has self-lubricating ability or the like, by making the friction coefficient of the surface small, the slidability on the inner circumference surface of the main rubber elastic body is increased, and it is possible to more advantageously realize low dynamic spring of the main rubber elastic body.

A tenth mode of the present invention provides the vibration damping device according to any one of the first through ninth modes, wherein an insertion tip end surface of the separate sleeve with respect to the main rubber elastic body abuts the first mounting member.

With the tenth mode, by an axial direction load being applied between the first mounting member and the second mounting member during installation on the member subject to vibration damping coupling, since the insertion tip end surface of the separate sleeve is pressed by the first mounting member, the separate sleeve is relatively displaced in the axial direction stably in relation to the inner circumference surface of the main rubber elastic body.

An eleventh mode of the present invention provides the vibration damping device according to any one of the first through tenth modes, wherein in the installed state, the rubber side abutting part and the sleeve side abutting part are relatively displaced in the axial direction so as to cancel the holding force acting between the main rubber elastic body and the separate sleeve.

With the eleventh mode, in the state installed on the member subject to vibration damping coupling, the sleeve side abutting part of the separate sleeve is contacting with 0 touch (contact state for which the holding force does not act) or separated from the rubber side abutting part of the main rubber elastic body. By so doing, restraining of the inner circumference surface of the main rubber elastic body by the separate sleeve is prevented, and it is possible to more effectively achieve low dynamic spring of the main rubber elastic body. Thus, the target vibration damping characteristics will be obtained.

### EFFECT OF THE INVENTION

With the present invention, a tube shaped main rubber elastic body has a separate sleeve inserted in it, and in a stand-alone state before being installed on the member subject to vibration damping coupling, by having the rubber side abutting part provided on the inner circumference surface of the main rubber elastic body and the sleeve side abutting part provided on the outer circumference surface of the separate sleeve mutually push against each other, the separate sleeve is held in the main rubber elastic body. On the other hand, in the installed state, since the rubber side abutting part and the sleeve side abutting part are relatively displaced in the axial direction by the axial direction load input during installation, the pressing against each other of the rubber side abutting part and the sleeve side abutting part is cancelled, and the holding force acting between the main rubber elastic body and the separate sleeve is reduced. Therefore, in the stand-alone state before installation, while separation of the main rubber elastic body and the separate sleeve is prevented, which helps transport and storage, in the installed state, by the restraining of the main rubber elastic body by the separate sleeve being decreased, the dynamic spring constant of the main rubber elastic body is reduced, so it is possible to obtain flexible spring characteristics.

### BRIEF DESCRIPTION OF THE DRAWINGS

FIG. 1 is a vertical cross-section view showing a vibration damping device in the form of an engine mount as a first embodiment of the present invention.
FIG. 2 is a plan view of the engine mount shown in FIG. 1.
FIG. 3 is a bottom view of the engine mount shown in FIG. 1.
FIG. 4 is a vertical cross-section view of a mount main unit constituting the engine mount shown in FIG. 1.
FIG. 5 is a vertical cross-section view of a separate sleeve constituting the engine mount shown in FIG. 1.
FIG. 6 is a vertical cross-section view showing the engine mount shown in FIG. 1 in a state of installation in a vehicle.
FIG. 7 is a specific view of a principle part of the engine mount shown in FIG. 1.
FIG. 8 is a specific view showing a principle part of a vibration damping device as a second embodiment of the present invention.
FIG. 9 is a specific view showing a principle part of a vibration damping device as a third embodiment of the present invention.
FIG. 10 is a specific view showing a principle part of a vibration damping device as a fourth embodiment of the present invention.
FIG. 11 is a specific view showing a principle part of a vibration damping device as a fifth embodiment of the present invention.
FIG. 12 is a specific view showing a principle part of a vibration damping device as a sixth embodiment of the present invention.
FIG. 13 is a specific view showing a principle part of a vibration damping device as a seventh embodiment of the present invention.

### EMBODIMENTS FOR CARRYING OUT THE INVENTION

Following, we will describe embodiments of the present invention while referring to the drawings.

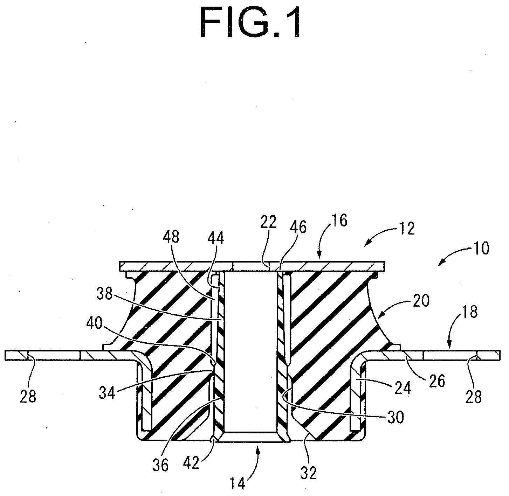

FIGS. 1 through 3 show an engine mount 10 for an automobile as a first embodiment of a vibration damping device constituted according to the present invention. This engine mount 10 is constituted with a separate sleeve 14 attached to a mount main unit 12, and the mount main unit 12 has a constitution for which a first mounting member 16 and a second mounting member 18 are elastically coupled by a main rubber elastic body 20. With the description hereafter, as a rule, the vertical direction means the vertical direction in FIG. 1 which is the axial direction. Also, the top side in FIG. 1 is the insertion tip end side of the separate sleeve 14, and the bottom side in FIG. 1 is the insertion base end side of the separate sleeve 14.

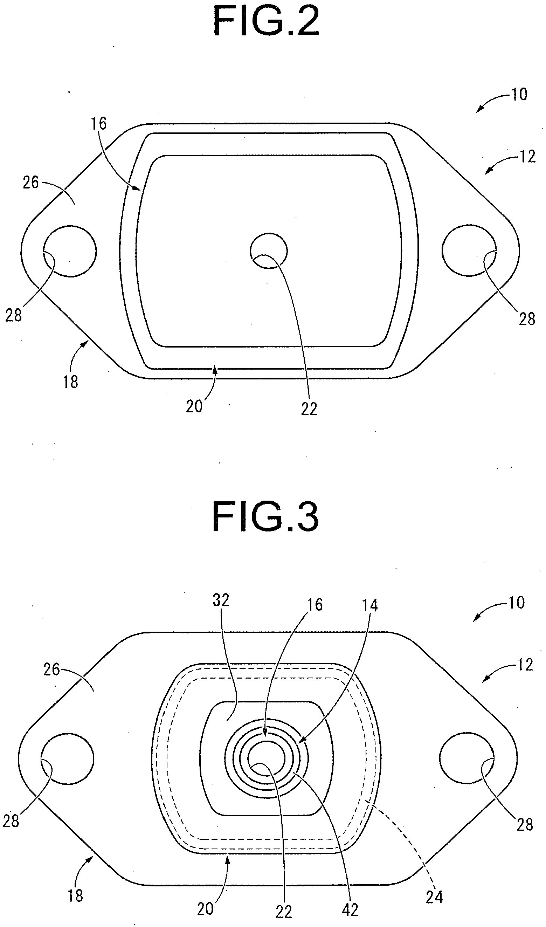

In more specific detail, as shown in FIGS. 1 and 2, the first mounting member 16 is a member exhibiting a thin-walled roughly rounded corner rectangular plate shape that broadens in the axis-perpendicular direction, and for example is a highly rigid member formed using a metal such as iron or an aluminum alloy, or by a synthetic resin or the like reinforced by fiber. Furthermore, at the center part of the first mounting member 16, a bolt insertion hole 22 that pierces vertically with a small diameter round disk cross section is formed.

Meanwhile, the second mounting member 18 is equipped with a roughly rounded corner rectangular tube shaped tubular part 24 and a flange shaped mounting piece 26 that extends out to the outer circumference side from one axial end part of the tubular part 24. Furthermore, a pair of bolt holes 28, 28 is formed piercing through both sides in the axis-perpendicular direction on the mounting piece 26. Press metal fittings can be suitably used as the first mounting member 16 and the second mounting member 18.

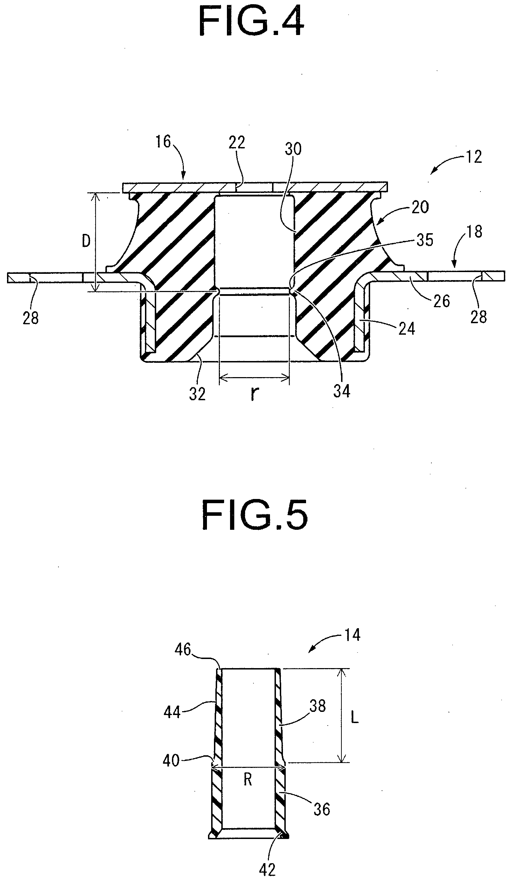

Also, the first mounting member 16 and the second mounting member 18 are arranged separated vertically, and are elastically coupled to each other by the main rubber elastic body 20. As shown in FIG. 4, the main rubber elastic body 20 is a thick-walled roughly rounded corner rectangular tube shape, and the first mounting member 16 is overlapped on one axial end surface and adhered by vulcanization, and the tubular part 24 of the second mounting member 18 is overlapped on the outer circumference surface of the other axial end part and adhered by vulcanization along the entire circumference. With this embodiment, the main rubber elastic body 20 is formed as an integrally vulcanization molded component equipped with the first mounting member 16 and the second mounting member 18, and the mount main unit 12 is constituted by the integrally vulcanization molded component of the main rubber elastic body 20. Also, with the tubular part 24 of the second mounting member 18, the bottom end surface and the outer circumference surface are covered by a covering rubber layer formed as an integral unit with the main rubber elastic body 20.

Also, the outer circumference end part of the first mounting member 16 and the mounting piece 26 of the second mounting member 18 are arranged facing opposite in the axial direction, and the outer circumference end part of the main rubber elastic body 20 is sandwiched between those axially opposing surfaces. By so doing, when a load is input in the vertical direction between the first mounting member 16 and the second mounting member 18, a part that is compressed in the vertical direction between the first mounting member 16 and the second mounting member 18 is provided on the main rubber elastic body 20.

Furthermore, the inner circumference surface of the main rubber elastic body 20 is a guide surface 32 inclined so as to expand gradually with the axially lower end part facing the axially outward, and the lower side opening part of a center hole 30 gradually having the diameter increase facing downward.

Yet further, a lip 34 that is an elastic projection part is provided as the rubber side abutting part at the axially center part of the inner circumference surface of the main rubber elastic body 20. The lip 34 is a projection that protrudes inside the center hole 30, and is provided in a ring shape in the circumferential direction on the inner circumference surface of the main rubber elastic body 20. Furthermore, the lip 34 has a vertical cross section shape that becomes narrow in width gradually in the axial direction facing the inner circumference side which is the protruding tip end side, and the top surface of the lip 34 serves as an inclined plane 35 that is gradually inclined downward facing the inner circumference side which is the protruding tip end side. By so doing, having the mold that forms the inner circumference surface of the main rubber elastic body 20 catch on the lip 34 is inhibited, and after the main rubber elastic body 20 is formed, it is easier to remove the mold in the axial direction from the main rubber elastic body 20. Yet further, the lip 34 is formed on the inner circumference side of the tubular part 24 of the second mounting member 18, and is overlapped on the tubular part 24 at the projection of the axis-perpendicular direction.

The separate sleeve 14 is attached to the mount main unit 12 constituted in this way. As shown in FIG. 5, the separate sleeve 14 has a small diameter roughly cylindrical shape, and with this embodiment, is a rigid member formed of synthetic resin. Also, with the separate sleeve 14, the outer diameter dimensions are made different by the lower part being thicker-walled compared to the upper part, and the lower part described later which is the insertion base end part with respect to the main rubber elastic body 20 serves as a large diameter part 36 provided as the sleeve side abutting part, and the upper part serves as a small diameter part 38 which is the insertion tip end part. Furthermore, a ring shaped step part 40 is formed between the large diameter part 36 and the small diameter part 38 on the outer circumference surface of the separate sleeve 14. As is clear from the fact that this step part 40 is a ring shape, the large diameter part 36 has a larger diameter than the small diameter part 38 along the entire circumference, and the sleeve side abutting part has a continuous ring shape along the entire circumference. In addition to synthetic resin, the separate sleeve 14 can also be formed using metal or the like. Also, for example, to reduce the friction coefficient of the surface of the separate sleeve 14, the separate sleeve 14 is formed using a material having self-lubricating ability, a lubricant layer is formed on the surface of the separate sleeve 14, and in the state inserted in the main rubber elastic body 20 described later, it is possible to reduce the friction resistance acting with the inner circumference surface of the main rubber elastic body 20.

Furthermore, an expansion part 42 is provided on the bottom end of the large diameter part 36 of the separate sleeve 14. This expansion part 42 has a tapered shape for which the inner diameter and the outer diameter gradually become larger as they go downward.

Furthermore, the small diameter part 38 gradually becomes thinner as it goes to the tip end side (upper side in FIG. 1), and the outer circumference surface of the small diameter part 38 serves as a tapered surface 44 that has a gradually smaller diameter as it goes upward. With this embodiment, the outer circumference surface of the large diameter part 36 gradually has a smaller diameter as it goes upward, but the outer circumference surface of the large diameter part 36 is made to constitute an axis-perpendicular direction stopper means by abutting with the second mounting member 18, so compared to the outer circumference surface of the small diameter part 38 (tapered surface 44), a substantial abutting surface area is more efficiently ensured. Also, with this embodiment, the step part 40 also is inclined and broadens in relation to the axial direction and the axis-perpendicular direction, and is a tapered shape that gradually has a smaller diameter as it goes upward. As a result, mold removal in the axial direction is improved when forming the separate sleeve 14, and it is possible to smoothly do insertion while preventing catching when inserting the separate sleeve 14 into the main rubber elastic body 20 as described later.

Also, as shown in FIG. 1, the separate sleeve 14 is inserted in a non-fixed state in the center hole 30 of the main rubber elastic body 20. Specifically, the separate sleeve 14 is inserted from below into the center hole 30 of the main rubber elastic body 20, and an insertion tip end surface 46 of the separate sleeve 14 abuts the periphery of the bolt insertion hole 22 of the first mounting member 16. With this embodiment, the internal diameter dimension of the part away from the lip 34 at the center hole 30 of the main rubber elastic body 20 is even greater than the outer diameter dimension of the large diameter part 36 of the separate sleeve 14. Furthermore, the inner circumference surface of the lower end opening part of the main rubber elastic body 20 is constituted by the taper shaped guide surface 32, so the work of inserting the separate sleeve 14 becomes easier by the guiding action of the guide surface 32. With this embodiment, the insertion tip end surface 46 of the separate sleeve 14 directly abuts the first mounting member 16, but for example, it is also possible to have it abut indirectly via a rubber layer for allowing a dimension tolerance, an elastic abutting part formed by a thick-walled rubber elastic body or the like.

Here, the length (L) from the insertion tip end surface 46 to the large diameter part 36 of the separate sleeve 14 is the same or less than the separation distance (D) in the axial direction of the bottom surface of the first mounting member 16 and the protruding tip end of the lip 34 (L ≤ D), and also the outer diameter dimension (R) of the large diameter part 36 of the separate sleeve 14 is greater than the inner diameter dimension (r) of the protruding tip end of the lip 34 of the main rubber elastic body 20 (R > r). As a result, in a state with the separate sleeve 14 inserted in the main rubber elastic body 20, with the lip 34, at least the protruding tip end is positioned over the large diameter part 36 of the separate sleeve 14, and pushes against the large diameter part 36. As is clear from FIGS. 4 and 5, before installation of the engine mount 10 in the vehicle, the distance (D) and the inner diameter dimension (r) noted above are the dimensions in a state for which a load is not input between the first mounting member 16 and the second mounting member 18. Also, the outer diameter dimension (R) of the large diameter part 36 means the outer diameter dimension at the axial direction position pushed by the protruding tip end of the lip 34 in a stand-alone state before installation in the vehicle.

Also, in a state with the lip 34 compressed in the protruding direction, by the separate sleeve 14 being inserted in the main rubber elastic body 20, the separate sleeve 14 is held in the main rubber elastic body 20 based on the elasticity of the lip 34. With this embodiment, the lip 34 provided in a ring form is pushed against the large diameter part 36 of the separate sleeve 14 along the entire circumference, and the separate sleeve 14 is held at the entire circumference by the main rubber elastic body 20.

Furthermore, the outer circumference surface of the separate sleeve 14 and the inner circumference surface of the main rubber elastic body 20 are separated from each other in the axis-perpendicular direction at a site separated from the abutting part of the lip 34 and the large diameter part 36, and a gap 48 is formed between the separate sleeve 14 and the main rubber elastic body 20. With this embodiment, the gap 48 is formed not only between the small diameter part 38 of the separate sleeve 14 and the main rubber elastic body 20, but also between the large diameter part 36 of the separate sleeve 14 and the main rubber elastic body 20.

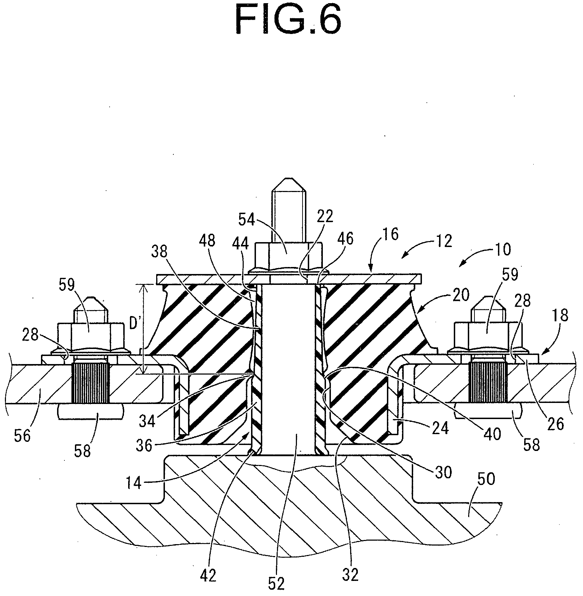

As shown in FIG. 6, the engine mount 10 constituted as noted above is installed in a vehicle. Specifically, a stud bolt 52 serving as a mounting rod protruding upward from a power unit 50 which is a first member subject to vibration damping coupling is inserted in the separate sleeve 14 arranged in the center hole 30 of the main rubber elastic body 20, and the tip end part is inserted in the bolt insertion hole 22 of the first mounting member 16. Also, by the tip end part of the stud bolt 52 being fixed to the first mounting member 16 by a nut 54, the first mounting member 16 is attached to the power unit 50. With the stud bolt 52 of this embodiment, the tip end part is set as a small diameter bolt part for which threads are formed on the outer circumference surface, and the base end part is set as a large diameter rod part without threads, and while the bolt part is inserted into the bolt insertion hole 22 and screwed into the nut 54, by the tip end surface of the rod part abutting the bottom surface of the first mounting member 16, the first mounting member 16 is aligned in the axial direction in relation to the stud bolt 52. By the outer circumference surface abutting the inner circumference surface of the separate sleeve 14, the rod part of the stud bolt 52 is aligned in the axis-perpendicular direction and the prying direction in relation to the separate sleeve 14. With this embodiment, the rod part of the stud bolt 52 is inserted in the separate sleeve 14 in a state abutting and engaged with the inner circumference surface of the separate sleeve 14 along roughly the entire surface of the outer circumference surface.

Meanwhile, the mounting piece 26 of the second mounting member 18 is overlapped on a vehicle body 56 which is a second member subject to vibration damping coupling, and the pair of bolts 58, 58 attached to the vehicle body 56 is inserted in the pair of bolt holes 28, 28 of the mounting piece 26, and also, by the respective nuts 59 being screwed into each bolt 58, the second mounting member 18 is attached to the vehicle body 56.

In this way, by the first mounting member 16 and the second mounting member 18 being attached to each one of the power unit 50 and the vehicle body 56, the engine mount 10 is interposed between the power unit 50 and the vehicle body 56, and the power unit 50 and the vehicle body 56 are vibration-damping coupled to each other.

In the state with the engine mount 10 installed in the vehicle as noted above, the stopper means for limiting the relative displacement volume of the first mounting member 16 and the second mounting member 18 in the axis-perpendicular direction is constituted by the separate sleeve 14 fitted externally onto the stud bolt 52 abutting on the tubular part 24 of the second mounting member 18 via the main rubber elastic body 20, and the durability of the main rubber elastic body 20 is improved. Furthermore, the separate sleeve 14 is interposed between the stud bolt 52 and the inner circumference surface of the main rubber elastic body 20, so it is possible to easily adjust the stopper clearance by appropriately setting the inner diameter and the outer diameter of the separate sleeve 14 without changing the outer diameter dimension of the stud bolt 52 and the inner diameter dimensions of the main rubber elastic body 20.

Also, in the state installed in the vehicle, a distributed support load of the power unit 50 is applied vertically in the axial direction between the first mounting member 16 and the second mounting member 18. By so doing, the engine mount 10 is made to be installed in the vehicle in a state with the first mounting member 16 and the second mounting member 18 relatively close in the axial direction with elastic deformation of the main rubber elastic body 20.

By having the first mounting member 16 and the second mounting member 18 be relatively close in the axial direction in this way, the separate sleeve 14 abutting the first mounting member 16 is pressed downward, and the outer circumference surface of the separate sleeve 14 is relatively displaced downward in the axial direction in relation to the inner circumference surface of the main rubber elastic body 20. As a result, in a stand-alone state before installation in the vehicle, the lip 34 of the main rubber elastic body 20 that was pressed against the large diameter part 36 of the separate sleeve 14 is relatively displaced in the axial direction in relation to the large diameter part 36 by installation of the engine mount 10 in the vehicle, and it moves over the small diameter part 38 of the separate sleeve 14.

In other words, in the state with the engine mount 10 installed in the vehicle, the separation distance (D') in the axial direction of the lower surface of the first mounting member 16 and the protruding tip end of the lip 34 becomes smaller than before installation in the vehicle (D' < D) by the elastic deformation of the main rubber elastic body 20. By so doing, the length (L) from the insertion tip end surface 46 to the large diameter part 36 of the separate sleeve 14 is larger than the separation distance (D') in the axial direction of the lower surface of the first mounting member 16 and the protruding tip end of the lip 34 (L > D'), and the lip 34 is positioned to the outer circumference side of the small diameter part 38.

Also, by the lip 34 of the main rubber elastic body 20 being positioned over the small diameter part 38 of the separate sleeve 14, the volume of compression deformation generated on the lip 34 by pressing on the separate sleeve 14 is made smaller, and the holding force applied to the separate sleeve 14 due to abutting of the lip 34 is made to decrease. With this embodiment, by the lip 34 moving over the small diameter part 38, the compression deformation of the lip 34 due to abutting on the separate sleeve 14 is cancelled, and the holding force acting between the main rubber elastic body 20 and the separate sleeve 14 is cancelled. This kind of holding force cancellation is realized, for example, by, in a state installed in the vehicle, the lip 34 being in a state separated to the outer circumference side in relation to the outer circumference surface of the small diameter part 38, or by being in a contact state of a level for which the lip 34 substantially does not have abutting pressure act on the small diameter part 38.

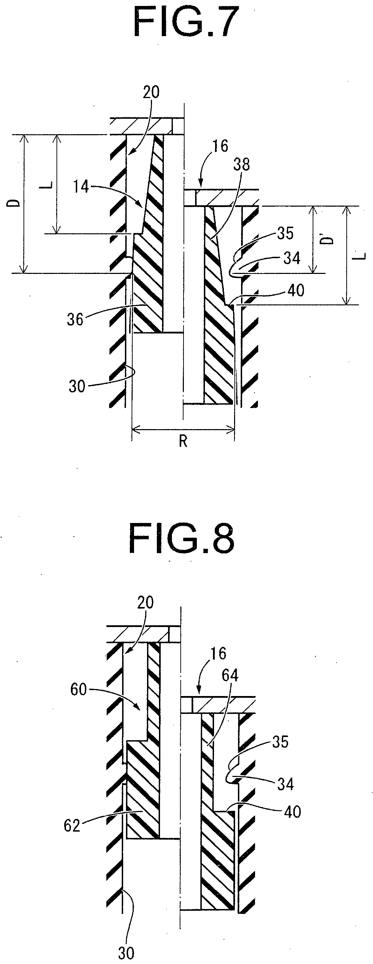

In FIG. 7, to aid the understanding of the relative displacement of the separate sleeve 14 and the main rubber elastic body 20 before this kind of vehicle installation and after installation, the vicinity of the center hole 30 of the main rubber elastic body 20 and the separate sleeve 14 are specifically shown. With FIG. 7 and with FIGS. 8 through 13 described later, the left half sandwiching the center line shown by the dot-dash line shows before installation in the vehicle, and the right half shows after installation in the vehicle. Also, with FIGS. 7 through 13, to make it easier to see, the position of the lip 34 and the like are matched as a reference in the left half and the right half, and the radial direction deformation of the main rubber elastic body 20 is omitted for a simplified display.

Specifically, as shown in the left half of FIG. 7, in the stand-alone state before installation in the vehicle, the lip 34 of the main rubber elastic body 20 presses against the large diameter part 36 of the separate sleeve 14, and the lip 34 is greatly compressed in the protrusion direction by the abutting pressure with the large diameter part 36. By so doing, elastic holding force acts on the separate sleeve 14 based on the elasticity of the lip 34, and the separate sleeve 14 is held in a state positioned relative to the main rubber elastic body 20.

On the other hand, in the state of installation in the vehicle, as is clear by comparing the left half and the right half of FIG. 7, the separate sleeve 14 is displaced relatively downward in relation to the inner circumference surface of the main rubber elastic body 20, and as shown in the right half of FIG. 7, the large diameter part 36 is positioned separated downward in relation to the lip 34. Also, the lip 34 is positioned to the outer circumference side of the small diameter part 38 of the separate sleeve 14, and the holding force applied to the separate sleeve 14 by abutting of the lip 34 is cancelled. With FIG. 7, for ease of understanding, a state is illustrated with the lip 34 separated from the separate sleeve 14 and the holding force cancelled, but for example, it is also possible to have the lip 34 abut the small diameter part 38 of the separate sleeve 14 in the state of installation in the vehicle, and to have holding force applied to the separate sleeve 14 based on the elasticity of the lip 34. In that case as well, by the lip 34 pushing against the small diameter part 38, the elastic deformation volume of the lip 34 is smaller than before installation in the vehicle, so the holding force applied to the separate sleeve 14 is reduced compared to before installation in the vehicle.

As shown in the right half of FIG. 7, the upper surface of the lip 34 (inclined plane 35) that is inclined downward toward the protruding tip end can also be set to have the incline angle in relation to the axial direction be smaller than that of the lower surface that inclines upward toward the protruding tip end. By so doing, the lip 34 becoming caught when removing after formation of the mold for forming the inner circumference surface of the main rubber elastic body 20 is prevented, and it is easy to do mold removal after forming the main rubber elastic body 20.

With the engine mount 10 constituted according to this kind of embodiment, in the stand-alone state before installation in the vehicle, by having the lip 34 of the main rubber elastic body 20 press against the large diameter part 36 of the separate sleeve 14, the separate sleeve 14 is elastically held by the main rubber elastic body 20. Therefore, during transport or storage of the engine mount 10 in a stand-alone state, it is possible to prevent having the separate sleeve 14 fall out from the main rubber elastic body 20 (mount main unit 12), and to maintain the target attached state.

With this embodiment, the lip 34 is positioned at the inner circumference side of the tubular part 24 of the second mounting member 18, and when the lip 34 presses against the large diameter part 36 of the separate sleeve 14, there is prevention of the compression deformation amount of the lip 34 being reduced by the main rubber elastic body 20 being deformed to the outer circumference side. Therefore, the holding force acting between the main rubber elastic body 20 and the separate sleeve 14 is effectively obtained based on the elasticity of the lip 34, and falling out of the separate sleeve 14 from the main rubber elastic body 20 is advantageously prevented.

Furthermore, the lip 34 of the main rubber elastic body 20 is continuous in ring form in the circumferential direction, and abuts the large diameter part 36 of the separate sleeve 14 along the entire circumference. Therefore, a large holding force is applied with good balance on the circumference in relation to the separate sleeve 14, and the separate sleeve 14 is held stably by the main rubber elastic body 20.

On the other hand, in the state with the engine mount 10 installed in a vehicle, by the distributed support load of the power unit 50 input during installation, the lip 34 moves over the small diameter part 38 of the separate sleeve 14. By so doing, the compression deformation amount of the lip 34 due to pressing against the separate sleeve 14 is reduced, and the holding force applied to the separate sleeve 14 based on the elasticity of the lip 34 is reduced or cancelled. As a result, during input of a vibration load, the friction force applied between the separate sleeve 14 and the main rubber elastic body 20 is reduced, and also, the restraining of the main rubber elastic body 20 by the separate sleeve 14 is decreased or prevented, and the dynamic spring constant of the main rubber elastic body 20 is lowered, so it is possible to realize the target flexible spring characteristics.

In particular with this embodiment, the gap 48 is formed between the separate sleeve 14 and the main rubber elastic body 20, and in the state of installation in the vehicle, the abutting surface area of the main rubber elastic body 20 and the separate sleeve 14 is small. Therefore, low dynamic spring of the main rubber elastic body 20 is realized advantageously, and it is possible to obtain the target vibration damping performance.

Furthermore, with this embodiment, the separate sleeve 14 is equipped with the large diameter part 36 and the small diameter part 38 at both sides sandwiching the step part 40, and the outer diameter dimension of the separate sleeve 14 is clearly different at the large diameter part 36 and the small diameter part 38. Therefore, the separate sleeve 14 is displaced relative to the inner circumference surface of the main rubber elastic body 20, and by the position of the lip 34 moving over the small diameter part 38 from on the large diameter part 36, the compression deformation amount of the lip 34 is greatly reduced, and the holding force of the separate sleeve 14 based on the elasticity of the lip 34 is greatly reduced. Therefore, it is possible to realize both stable holding of the separate sleeve 14 before installation in the vehicle, and low dynamic spring characteristics after installation in the vehicle.

The specific constitution of the main rubber elastic body and the separate sleeve is not limited to the items noted in the first embodiment, and hereafter in FIGS. 8 through 13, we will describe a number of other specific constitution examples of the main rubber elastic body and the separate sleeve. FIGS. 8 through 13, the same as with FIG. 7, specifically show a principle part of the vibration damping device of the present invention, and the constitution of each embodiment shown in FIGS. 8 through 13 is suitable for the same kind of engine mount or the like as that of the first embodiment. Also, in the description hereafter, the same code numbers in the drawings will be given to substantially the same members and parts as with the aforementioned embodiment, and a description of these will be omitted.

FIG. 8 shows the main rubber elastic body 20 and a separate sleeve 60 constituting the vibration damping device as the second embodiment of the present invention. The separate sleeve 60 has a round cylindrical surface for which a large diameter part 62 and the outer circumference surface of a small diameter part 64 broaden roughly in parallel to the axial direction, and an incline in relation to the axial direction is not set. With the constitution of this kind of embodiment as well, it is possible to obtain both holding force acting on the separate sleeve 60 before installation in the vehicle, and low dynamic spring of the main rubber elastic body 20 after installation in the vehicle. In other words, the tapered shape of the outer circumference surface shown with the separate sleeve 14 of the first embodiment is an item provided with the goal of improving the removability of the mold after formation of the separate sleeve 14, and is not essential.

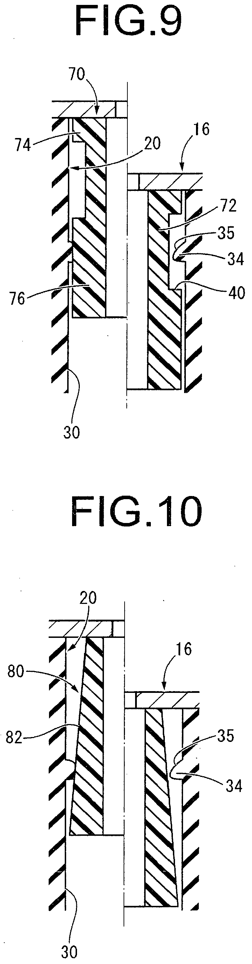

FIG. 9 shows the main rubber elastic body 20 and a separate sleeve 70 constituting the vibration damping device as the third embodiment of the present invention. The separate sleeve 70 overall has a roughly round tubular shape, with a small diameter part 72 formed for which the outer diameter dimension is partially small at the axially center part, with a first large diameter part 74 formed at the one axial side sandwiching the small diameter part 72 and a second large diameter part 76 formed at the other axial side sandwiching the small diameter part 72.

Also, as shown in the left half of FIG. 9, in a stand-alone state before installation in the vehicle, the lip 34 of the main rubber elastic body 20 is pressed against the outer circumference surface of the second large diameter part 76 of the separate sleeve 70, and since the lip 34 undergoes compression deformation in the protruding direction, the separate sleeve 70 is held by the main rubber elastic body 20 based on the elasticity of the lip 34.

On the other hand, as shown in the right half of FIG. 9, in the state of installation in the vehicle, by the distributed support load of the power unit 50 acting, the separate sleeve 70 is relatively displaced in the axial direction in relation to the inner circumference surface of the main rubber elastic body 20, and the lip 34 of the main rubber elastic body 20 moves over the small diameter part 72. By so doing, the deformation volume of the lip 34 is smaller, and the holding force applied to the separate sleeve 70 based on the elasticity of the lip 34 is reduced. Thus, the restraining by the separate sleeve 70 of the main rubber elastic body 20 is weakened, and low dynamic spring of the main rubber elastic body 20 is produced.

In this way, the small diameter part of the separate sleeve does not absolutely have to be formed at the axially end part of the separate sleeve, and even if it is partially formed on the axially center part of the separate sleeve, it is possible to exhibit the same effects. With this embodiment, the sleeve side abutting part is constituted by the second large diameter part 76.

FIG. 10 shows the main rubber elastic body 20 and a separate sleeve 80 constituting the vibration damping device as the fourth embodiment of the present invention. The separate sleeve 80 is constituted by a uniformly tapered outer circumference surface 82 for which the overall outer circumference surface has a gradually smaller diameter facing the one axial side, and the step part 40 is not formed on the outer circumference surface.

With this kind of constitution as well, in the stand-alone state before installation in the vehicle, as shown in the left half of FIG. 10, by having the lip 34 press against the tapered outer circumference surface 82 with the end part on the other axial side that is the large diameter side, the deformation volume of the lip 34 by pressing is set to be large, and the separate sleeve 80 is held by the main rubber elastic body 20. On the other hand, in the state of installation in the vehicle, as shown in the right half of FIG. 10, by the lip 34 moving to the small diameter side of the tapered outer circumference surface 82, the deformation volume of the lip 34 is reduced. Accordingly, the holding force of the separate sleeve 80 based on the elasticity of the lip 34 is reduced, thereby producing low dynamic spring of the main rubber elastic body 20.

In this way, when the outer diameter dimension of the separate sleeve is changed, it is not absolutely necessary to set a clear difference in outer diameter dimensions using the step part, and it is also possible to have the outer diameter dimensions change gradually. With this embodiment, the sleeve side abutting part is constituted by the end part of the large diameter side of the separate sleeve 80.

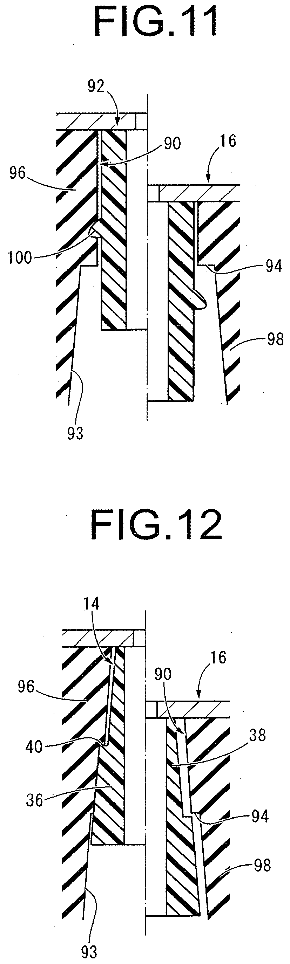

FIG. 11 shows a main rubber elastic body 90 and a separate sleeve 92 constituting the vibration damping device as the fifth embodiment of the present invention. The main rubber elastic body 90 is equipped with a step part 94 at the axially center part of a center hole 93, the diameter of the center hole 93 sandwiches the step part 94 and the upper side is smaller than the lower side, and the upper side sandwiching the step part 94 serves as a small diameter part 96, while the lower side sandwiching the step part 94 serves as a large diameter part 98. In other words, an elastic projecting part is constituted by the inner circumference part of the small diameter part 96 protruding with the step part 94 at the inner circumference surface of the center hole 93 of the main rubber elastic body 90.

On the other hand, the separate sleeve 92 has a roughly round cylinder shape having roughly fixed inner and outer diameter dimensions in the axial direction, and is equipped with a protruding part 100 to the outer circumference side on the axially center part. This protruding part 100 is provided in a ring shape continuously in the circumferential direction with a vertical cross section shape which is gradually narrower in width facing the protruding tip end side.

Also, as shown in the left half of FIG. 11, in the stand-alone state before installation in the vehicle, the protruding part 100 of the separate sleeve 92 is positioned on the small diameter part 96 of the main rubber elastic body 90, and presses against the inner circumference surface of the small diameter part 96. By so doing, the small diameter part 96 of the main rubber elastic body 90 is greatly elastically deformed by the protruding part 100, and holding force based on the elasticity of the main rubber elastic body 90 is applied to the separate sleeve 92.

On the other hand, in the state of installation in the vehicle, as shown in the right half of FIG. 11, by the separate sleeve 92 being relatively displaced in the axial direction in relation to the inner circumference surface of the main rubber elastic body 90, the protruding part 100 of the separate sleeve 92 moves over the large diameter part 98 of the main rubber elastic body 90. By so doing, the pressing of the protruding part 100 on the inner circumference surface of the main rubber elastic body 90 of the protruding part 100 is reduced or cancelled, and the holding force based on the main rubber elastic body 90 is reduced or cancelled.

In this way, even with a constitution for which the inner diameter dimension of the main rubber elastic body 90 is mutually different at both sides sandwiching the step part 94, and the protruding part 100 is provided on the outer circumference surface of the separate sleeve 92, the same as with each of the aforementioned embodiments, both holding of the separate sleeve 92 before installation in the vehicle and lower dynamic spring of the main rubber elastic body 90 after installation in the vehicle are realized. With this embodiment, the rubber side abutting part is constituted by the small diameter part 96 of the main rubber elastic body 90, and the sleeve side abutting part is constituted by the protruding part 100.

FIG. 12 shows the main rubber elastic body 90 and the separate sleeve 14 constituting the vibration damping device as the sixth embodiment of the present invention. Specifically, the vibration damping device of this embodiment has a constitution for which the separate sleeve 14 shown in the first embodiment is inserted in the center hole 93 of the main rubber elastic body 90 shown in the fifth embodiment.

Also, in the stand-alone state before installation in the vehicle, as shown in the left half of FIG. 12, by having the small diameter part 96 of the main rubber elastic body 90 and the large diameter part 36 of the separate sleeve 14 push against each other, holding force based on the elasticity of the main rubber elastic body 90 is applied to the separate sleeve 14.

On the other hand, as shown in the right half of FIG. 12, in the state installed in the vehicle, by the large diameter part 36 of the separate sleeve 14 moving over the large diameter part 98 of the main rubber elastic body 90, the pressing of the outer circumference surface of the separate sleeve 14 and the inner circumference surface of the main rubber elastic body 90 is reduced or cancelled, and the elastic deformation of the main rubber elastic body 90 is reduced. Therefore, the holding force based on the elasticity of the main rubber elastic body 90 is reduced, so as to produce low dynamic spring of the main rubber elastic body 90.

As shown with this embodiment, the inner circumference surface of the main rubber elastic body 90 and the outer circumference surface of the separate sleeve 14 are respectively stepped shapes, and the rubber side abutting part is constituted by the small diameter part 96 of the main rubber elastic body 90 and the sleeve side abutting part can also be constituted by the large diameter part 36 of the separate sleeve 14.

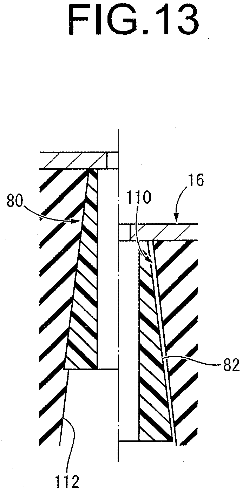

FIG. 13 shows a main rubber elastic body 110 and a separate sleeve 80 constituting the vibration damping device as the seventh embodiment of the present invention. The main rubber elastic body 110 is a tube shape equipped with a center hole 112, and the inner circumference surface is an inner circumference tapered surface inclined upward in the axial direction along the entirety, and the center hole 112 has a gradually smaller diameter facing the axially upward. On the other hand, as shown with the fourth embodiment, with the separate sleeve 80, the outer circumference surface serves as a tapered outer circumference surface 82 inclined in relation to the axial direction at a roughly uniform incline angle, and has the diameter become gradually smaller facing the axially upward.

With the constitution according to this kind of embodiment as well, in the stand-alone state before installation in the vehicle, as shown in the left half of FIG. 13, the outer circumference surface of the separate sleeve 80 is pressed against the inner circumference surface of the main rubber elastic body 110, and the holding force based on the elasticity of the main rubber elastic body 110 is applied to the separate sleeve 80. Meanwhile, in the state of installation in the vehicle, as shown in the right half of FIG. 13, by the separate sleeve 80 being relatively displaced in the axial direction in relation to the inner circumference surface of the main rubber elastic body 110, the inner circumference surface of the main rubber elastic body 110 and the outer circumference surface of the separate sleeve 80 are separated from each other. By so doing, the holding force based on the elasticity of the main rubber elastic body 110 is cancelled, and restraining of the main rubber elastic body 110 by the separate sleeve 80 is prevented. This will produce low dynamic spring of the main rubber elastic body 110.

As is clear from the constitution of this embodiment, having a step part or lip provided on the inner circumference surface of the main rubber elastic body or the outer circumference surface of the separate sleeve is not essential for the present invention. With this embodiment, in a stand-alone state before installation in the vehicle, at the inner circumference surface of the main rubber elastic body 110, the part that abuts the separate sleeve 80 is set as the rubber side abutting part, and the entire outer circumference surface of the separate sleeve 80 (tapered outer circumference surface 82) is set as the sleeve side abutting part.

Above, we gave a detailed description regarding embodiments of the present invention, but the present invention is not limited by those specific notations. For example, with the embodiments noted above, an example was shown with a constitution for which the rubber side abutting part and the sleeve side abutting part have a continuous ring shape along the entire circumference, but it is also possible to have the rubber side abutting part and the sleeve side abutting part both be formed partially on the circumference, and furthermore to have a plurality of those partial abutting parts provided dispersed on the circumference.

Also, the rubber side abutting part and the sleeve side abutting part can have a plurality provided separated in the axial direction, specifically, for example with the constitution of the third embodiment shown in FIG. 9, it is possible to have a plurality of lips 34 provided at positions mutually separated in the axial direction on the inner circumference surface of the main rubber elastic body 20, and to have a plurality of small diameter parts 72 provided at positions mutually separated in the axial direction on the outer circumference surface of the separate sleeve 70. By so doing, in the stand-alone state before installation, each lip 34 of the main rubber elastic body 20 presses against each large diameter part 76 of the separate sleeve 70, whereas in the installed state, each lip 34 of the main rubber elastic body 20 is positioned on each small diameter part 72 of the separate sleeve 70, and by so doing, the holding force acting between the main rubber elastic body 20 and the separate sleeve 70 is reduced.

Also, the inner diameter dimension of the separate sleeve does not necessarily have to be fixed along the entire length in the axial direction, and for example it is also possible for the inner diameter dimension of the small diameter part to be made smaller than the inner diameter dimension of the large diameter part, and to have the thickness of the separate sleeve be roughly constant.

Also, the main rubber elastic body, if it is tubular, can be a round cylinder shape, for example. Similarly, the specific shape of the first and second mounting members is not particularly limited.

Furthermore, it is also possible to use a constitution for which an intermediate plate is arranged so as to broaden in roughly the axis-perpendicular direction in the axial direction between the mounting piece 26 of the first mounting member 16 and the second mounting member 18, with the intermediate plate fixed to the main rubber elastic body 20. In this case, the intermediate plate protrudes inside the center hole 30 of the main rubber elastic body 20, and by having the insertion tip end surface 46 of separate sleeve 14 abut the intermediate plate, using the axial direction load input during installation, the separate sleeve 14 can also be made to be relatively displaced in relation to the inner circumference surface of the main rubber elastic body 20.

The present invention can be applied not only to engine mounts, but can also be suitably applied to various types of vibration damping devices including body mounts, member mounts and the like. Also, the applicable scope of the present invention is not limited to vibration damping devices of automobiles, but can also be applied to vibration damping devices used for other than automobiles such as for example motorcycles, railroad vehicles, industrial vehicles and the like.

### KEYS TO SYMBOLS

10: Engine mount (vibration damping device), 12: Mount main unit, 14, 60, 80, 82: Separate sleeve, 16: First mounting member, 18: Second mounting member, 20, 90, 110: Main rubber elastic body, 24: Tubular part, 34: Lip (rubber side abutting part, elastic projecting part), 36, 62, 76: Large diameter part (sleeve side abutting part), 38, 64, 72: Small diameter part, 40: Step part, 44: Tapered surface, 46: Insertion tip end surface, 48: Gap, 50: Power unit (first member subject to vibration damping coupling), 52: Stud bolt (mounting rod), 56: Vehicle body (second member subject to vibration damping coupling), 96: Small diameter part (rubber side abutting part, elastic projecting part)

## Claims

1. A vibration damping device wherein a first mounting member is fixed to one axial end surface of a tubular main rubber elastic body while a second mounting member is fixed to an outer circumference surface of the main rubber elastic body, and an axial direction load is applied between the first mounting member and the second mounting member in an installed state in which the first mounting member is attached to a first member subject to vibration damping coupling by a mounting rod inserted in the main rubber elastic body being fixed to the first mounting member while the second mounting member is attached to a second member subject to vibration damping coupling, the vibration damping device being **characterized in that**:
a separate sleeve is inserted in a non-fixed state in the main rubber elastic body, and a rubber side abutting part provided on an inner circumference surface of the main rubber elastic body and a sleeve side abutting part provided on an outer circumference surface of the separate sleeve are pushed against each other so that the separate sleeve is held in the main rubber elastic body; and
in the installed state, the rubber side abutting part and the sleeve side abutting part are relatively displaced in an axial direction so as to reduce a holding force acting between the main rubber elastic body and the separate sleeve.

2. The vibration damping device according to claim 1, wherein the rubber side abutting part and the sleeve side abutting part are provided continuously in a ring shape in a circumferential direction.

3. The vibration damping device according to claim 1 or 2, wherein a gap is formed between the inner circumference surface of the main rubber elastic body and the outer circumference surface of the separate sleeve.

4. The vibration damping device according to any one of claims 1-3, wherein an elastic projecting part is provided on the inner circumference surface of the main rubber elastic body, and the rubber side abutting part is constituted by the elastic projecting part.

5. The vibration damping device according to claim 4, wherein the elastic projecting part has an inclined plane which is positioned at an insertion tip end side of the separate sleeve with respect to the main rubber elastic body, the inclined plane inclined to an insertion base end side of the separate sleeve facing an inner circumference side of the main rubber elastic body.

6. The vibration damping device according to any one of claims 1-5, wherein a large diameter part and a small diameter part are provided on the outer circumference surface of the separate sleeve, and a step part is provided between the large diameter part and the small diameter part, while the sleeve side abutting part is constituted by the large diameter part.

7. The vibration damping device according to claim 6, wherein the small diameter part is provided on an insertion tip end part of the separate sleeve with respect to the main rubber elastic body, and an outer circumference surface of the small diameter part comprises a tapered surface which has a gradually smaller diameter going toward the insertion tip end side of the separate sleeve.

8. The vibration damping device according to any one of claims 1-7, wherein a tubular part provided on the second mounting member is fixed along an entire circumference to the outer circumference surface of the main rubber elastic body, and the rubber side abutting part is provided on an inner circumference side of the tubular part.

9. The vibration damping device according to any one of claims 1-8, wherein the separate sleeve is formed of synthetic resin.

10. The vibration damping device according to any one of claims 1-9, wherein an insertion tip end surface of the separate sleeve with respect to the main rubber elastic body abuts the first mounting member.

11. The vibration damping device according to any one of claims 1-10, wherein in the installed state, the rubber side abutting part and the sleeve side abutting part are relatively displaced in the axial direction so as to cancel the holding force acting between the main rubber elastic body and the separate sleeve.
